(19) Europäisches Patentamt / European Patent Office / Office européen des brevets

(11) **EP 2 341 731 B1**

(12) **EUROPEAN PATENT SPECIFICATION**

(45) Date of publication and mention
of the grant of the patent:
**02.08.2017  Bulletin 2017/31**

(21) Application number: **08877646.3**

(22) Date of filing: **30.10.2008**

(51) Int Cl.:
**H04W 4/18** (2009.01)       *H04W 88/08* (2009.01)

(86) International application number:
**PCT/CN2008/001817**

(87) International publication number:
**WO 2010/048743 (06.05.2010 Gazette 2010/18)**

(54) **COOPERATIVE TYPE CONVERSION TECHNIQUE OF MULTI-SECTOR COOPERATIVE COMMUNICATION**

UMSETZUNGSTECHNIK DES KOOPERATIVEN TYPS FÜR KOOPERATIVE MEHRSEKTOR-KOMMUNIKATION

TECHNIQUE DE CONVERSION DE TYPE COOPÉRATIF D'UNE COMMUNICATION COOPÉRATIVE À MULTIPLES SECTEURS

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**06.07.2011  Bulletin 2011/27**

(73) Proprietor: **ALCATEL LUCENT**
**92100 Boulogne-Billancourt (FR)**

(72) Inventors:
• **YANG, Hongwei**
**Shanghai 201206 (CN)**
• **LI, Dong**
**Shanghai 201206 (CN)**

(74) Representative: **Wetzel, Emmanuelle**
**Alcatel-Lucent**
**Intellectual Property Business Group**
**70430 Stuttgart (DE)**

(56) References cited:
CN-A- 1 165 459       CN-A- 1 230 864
CN-A- 1 327 638       US-A1- 2004 176 097
US-A1- 2007 223 423       US-B1- 6 684 074

• **LG ELECTRONICS: "Network MIMO in LTE-Advanced", 3GPP DRAFT; R1-083653, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050317006, [retrieved on 2008-09-24]**
• **ALCATEL SHANGHAI BELL ET AL: "Collaborative MIMO for LTE-Advanced Downlink", 3GPP DRAFT; R1-082812_DL COLLABORATIVE MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316305, [retrieved on 2008-08-12]**

## Description

Technical field

The invention relates to the wireless communication technology, particularly relates to the multi-sector cooperative communication technology.

Background of the arts

As the evolution of standards, e.g. IEEE802.16e and 3GPP LTE, to IMT-advanced, IEEE 802.16m and 3GPP LTE+, the system targets for much higher average sector throughput and cell edge user throughput. Due to the low frequency re-usage in the current wireless communication network, there is a certain inter-cell interference (ICI) at the edge of the sector and the cell, which results in that the system performances are hard to be increased. To address this, many techniques to solve ICI issues have appeared in e.g. IEEE 802.16e and 3GPP LTE, such as ICI-aware power control, flexible frequency reuse, macro diversity, ICI randomization with interference cancellation at receiver, and so on. Most of these techniques can effectively improve cell edge user throughput, but all have some drawbacks, for example some cost too much system spectrum efficiency while some have high requirements for the receiver complexity.

Multi-cell (multi-sector) cooperative communication, such as multi-cell Multiple Input Multiple Output (MIMO) technology is a promising multiple-antenna technique for effective ICI reduction via jointly precoding of the transmitted signals across multiple cells, and thus both average sector throughput and cell-edge user throughput can be improved significantly. Currently, multi-cell MIMO has been adopted into IEEE 802.16m System Description Document (a baseline concept/function description document for IEEE 802.16m specification development) which makes it become a hot but also practical topic in not only the research field, but also the industry. It has been led by Alcatel-Lucent and has become an important standardization element in both IEEE802.16m and 3GPP LTE+.

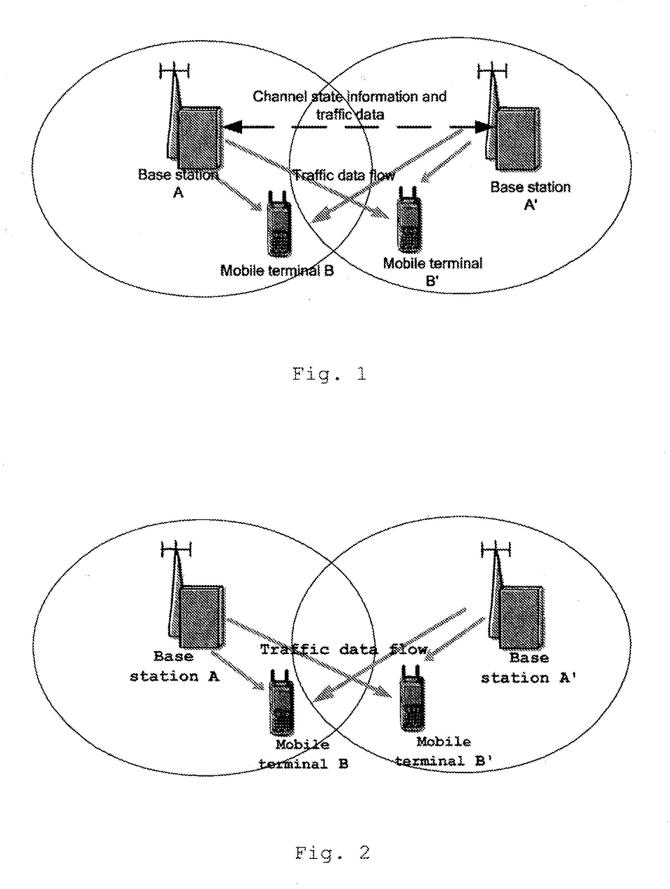

There exist two typical multi-cell cooperative communication technologies, e.g. network based multi-cell cooperative communication such as network MIMO and collaboration based multi-cell cooperative MIMO such as collaborative MIMO (Co-MIMO) . Both of them relate to coordination between multiple cooperative base stations or base station equipments. In network MIMO, based on the channel information from all base stations to all mobile terminals participating in the MIMO, each participating base station carries out joint multi-user precoding based on algorithms like zero-forcing (ZF), block diagonalization (BD), maximum eigen-mode transmission (MET), etc. to determine a precoding scheme maximizing the multi-user channel capacity; each base station exchanges the traffic data of the dominated mobile terminal participating in MIMO with other base stations, weights all of the traffic data symbols according to the precoding rules and sends them to each mobile terminal; the received signals combined by the mobile terminal receiver are orthogonal, thus ICI is completely prevented and the system performance is significantly improved. Fig. 1 shows the network architecture of network MIMO. It can be seen that, each base station equipment participating in MIMO exchanges, with each other, its channel state information (CSI) with every mobile terminal participating in MIMO, or even the traffic data to the dominated mobile terminals participating in MIMO, which has large requirement on the transmission bandwidth and network latency. In case that inter-base station network short of bandwidth resource, for example the backbone network, is used for exchanging this information, increased latency and worsened performance might be resulted in.

In Co-MIMO, different from network MIMO, each base station no longer needs the channel state information between other base stations and mobile terminals, but determines the precoding rule only based on the channel state information between itself and each mobile terminal participating in MIMO. Besides, each base station doesn't need to exchange traffic data. After exchanging the precoding rules in a relatively small data amount with other base stations, the base station weights the traffic data symbols of the dominated cell according to the precoding rules and sends to the dominated mobile terminal. ICI is prevented to some extent and the system performance is improved by the Co-MIMO. Fig. 2 shows the network architecture of Co-MIMO. It can be seen that the traffic data and the channel state information do not need to be communicated between each participating base stations, thus a great amount of transmission bandwidth is saved; however, the MIMO gain is limited since that the precoding is only based on the channel state information in the present sector.

It can be seen that the network-based multi-cell cooperative communication and the collaboration-based multi-cell cooperative communication have their respective advantages and drawbacks. However, the present base station or base station equipment is restricted to provide, for the mobile terminal in the cell or at the edge of the sector, network-based multi-cell (multi-sector) cooperative communication such as network MIMO fixedly or collaboration-based multi-cell (multi-sector) cooperative communication such as Co-MIMO fixedly.

Summary of the invention

Some of the conception and terms in the invention are defined as follows:

Cell: generally denoting a hexagonal cell in the cellular network might be resulted in.

In Co-MIMO, different from network MIMO, each base station no longer needs the channel state information between other base stations and mobile terminals, but determines the precoding rule only based on the channel state information between itself and each mobile terminal participating in MIMO. Besides, each base station doesn't need to exchange traffic data. After exchanging the precoding rules in a relatively small data amount with other base stations, the base station weights the traffic data symbols of the dominated cell according to the precoding rules and sends to the dominated mobile terminal. ICI is prevented to some extent and the system performance is improved by the Co-MIMO. Fig. 2 shows the network architecture of Co-MIMO. It can be seen that the traffic data and the channel state information do not need to be communicated between each participating base stations, thus a great amount of transmission bandwidth is saved; however, the MIMO gain is limited since that the precoding is only based on the channel state information in the present sector.

It can be seen that the network-based multi-cell cooperative communication and the collaboration-based multi-cell cooperative communication have their respective advantages and drawbacks. However, the present base station or base station equipment is restricted to provide, for the mobile terminal in the cell or at the edge of the sector, network-based multi-cell (multi-sector) cooperative communication such as network MIMO fixedly or collaboration-based multi-cell (multi-sector) cooperative communication such as Co-MIMO fixedly.

D1 US2004/176097 A1 (WILSON FIONA [GB] ET AL), 9 September 2004 (2004-09-09), discloses allocation of subchannels of MIMO channels of a wireless network.

D2 LG ELECTRONICS: "Network MIMO in LTE-Advanced", 3GPP DRAFT; R1-083653, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Prague, Czech Republic; 20080924, 24 September 2008, discloses possible scenarios for network MIMO in LTE-Advanced.

Summary of the invention

Some of the conception and terms in the invention are defined as follows:

Cell: generally denoting a hexagonal cell in the cellular network architecture.

Sector: generally denoting a served sector area, in a cell, covered by the signal of an antenna feeding system. The sector is an independent logical network area. In MIMO technology, in case that directional antennas are used, a cell includes multiple sectors. For example, a cellular cell can be constituted by three sectors with the same size, and the angle of each sector is 120 degree.

Base station equipment: physical network entity configured for and corresponding to each sector, for example a base band board including physical layer devices such as encoder, modulator and MAC layer devices such as scheduling means and measuring means. The base station equipment is directly connected to the antenna feeding system corresponding to the sector, and takes charge of control and data communication within the sector. Each base station equipment dominating one sector in the same cell can be positioned in the same rack of the base station for the cell, and connects with each other via high speed interconnection between the base station equipments, for example high speed data cables, in order to exchange information at a high speed; meanwhile, each base station equipment connects to the internetwork between the base stations, such as the backbone network, in order to exchange with other base stations and its other internal base station equipment therein.

According to the above definition, the multi-base station cooperative communication can be described as multi-sector cooperative communication technology in the present description.

The inventor realizes that the art has following drawbacks: it can not carry out optimized cooperative communication according to the practical situation of the cooperating base station equipment, since the cooperation manner is fixed. For example, when the network-based multi-sector cooperative communication such as network-MIMO is conducted fixedly, in case that the cooperating base station equipment belongs to a cell different from that of the present sector, the communication therebetween can only be carried by the internetwork between the base stations, but the exchange of the huge amount of traffic data and channel state information required by the network-based multi-sector cooperative communication will consume the already scarce bandwidth of the internetwork between the base stations, thus the latency is increased and the performance is decreased. When the collaboration-based multi-sector cooperative communication such as Co-MIMO is conducted fixedly, in case that the cooperating base station equipment belongs to the same cell as that of the present sector, information exchange is carried by high speed interconnection such as high speed cables so as to realize collaboration -based multi-sector cooperative communication for an optimized MIMO gain, however, since the collaboration-based multi-sector cooperative communication is conducted fixedly, the gain is not optimized. Therefore, it is important for the multi-sector cooperative communication technology to solve these existing technical problems.

To address these concerns, according to one aspect of the invention, it is proposed a method, in a base station equipment of a wireless communication network, of providing multi-sector cooperative communications for a mobile terminal in a sector dominated by the base station equipment, said sector belonging to a cell, the method comprising the steps of:

i. determining one or more cooperating sector of the mobile terminal;

ii. determining a type of the multi-sector cooperative communication provided cooperatively with said one or more cooperating sectors for the mobile terminal, based on information of said one or more cooperating sectors, according to predefined rules;

iii. cooperating with said one or more cooperating sector and providing, for the mobile terminal, the multi-sector cooperative communication of the corresponding determined type, wherein said one or more cooperating sector is one or more same-cell cooperating sector belonging to the same cell as the sector , one or more different-cell cooperating sector belonging to a different cell as the sector, or comprises said one or more same-cell cooperating sector and said one or more different-cell cooperating sector simultaneously.

According to another aspect, it is proposed a method, in mobile terminal of wireless communication network, of assisting the base station equipment of the sector, in which the mobile terminal is located, to provide multi-sector cooperative communication for the mobile terminal, said sector belonging to a cell, and the method comprising the following steps:

I. obtaining channel quality information between the mobile terminal and one or more neighboring sectors that neighbor said mobile terminal;

II. determining one or more cooperating sectors of the mobile terminal, according to the channel quality information between the mobile terminal and the one or more neighboring sector;

III. transmitting, to the base station equipment, information of said one or more cooperating sectors; wherein, said one or more cooperating sectors comprise same-cell cooperating sectors belonging to the same cell, and/or different-cell cooperating sectors belonging to a different cell, and said step II comprises the following steps:

in case that the channel quality between the mobile terminal and one or more candidate sectors in said one or more neighboring sectors belonging to the same cell satisfies a first condition, determining said one or more candidate sectors as said same-cell cooperating sectors;

in case that the channel quality between the mobile terminal and one or more candidate sectors in said one or more neighboring sectors belonging to the different cell satisfies a second condition, determining said one or more candidate sectors as said different-cell cooperating sectors.

According to the third aspect, it is provided a device, in a base station equipment of a wireless communication network, for providing multi-sector cooperative communications for a mobile terminal in a sector dominated by the base station equipment, said sector belonging to a cell, the device comprising:

a first determining means for cooperating sector, for determining one or more cooperating sectors of the mobile terminal;

a determining means for cooperating type, for determining a type of the multi-sector cooperative communication provided cooperatively with said one or more cooperating sectors for the mobile terminal, based on information of said one or more cooperating sectors, according to predefined rules;

a communication means, for cooperating with said one or more cooperating sector and providing, for the mobile terminal, the multi-sector cooperative communication of the corresponding determined type.

According to the fourth aspect, it is provided an assisting device, in a mobile terminal of a wireless communication network, for assisting the base station equipment of a sector, in which the mobile terminal is located, to provide a multi-sector cooperative communication for the mobile terminal, said sector belonging to a cell, and the device comprising:

an obtaining means for channel quality, for obtaining channel quality information between the mobile terminal and one or more neighboring sectors that neighbor said mobile terminal;

a second determining means for cooperating sectors, for determining one or more cooperating sectors of the mobile terminal, according to the channel quality information between the mobile terminal and the one or more neighboring sectors;

a transmitter, for transmitting to the base station equipment, information of said one or more cooperating sectors;

wherein said one or more cooperating sectors comprise same-cell cooperating sectors belonging to the same cell, and/or different-cell cooperating sectors belonging to a different cell, and said second determining means for cooperating sectors is used for:

in case that the channel quality between the mobile terminal and one or more candidate sectors in said one or more neighboring sectors belonging to the same cell satisfies a first condition, determining said one or more candidate sectors as said same-cell cooperating sectors;
in case that the channel quality between the mobile terminal and one or more candidate sectors in said one or more neighboring sectors belonging to the different cell satisfies a second condition, determining said one or more candidate sectors as said different-cell cooperating sectors

The invention proposes a new implementation scheme for multi-sector cooperative communication, which could select a proper type of multi-sector cooperative communication, such as network-based multi-sector cooperative communication or collaboration-based multi-sector cooperative communication, according to the type of the cooperating sector. In this way, the complete channel state information and data are exchanged between the same-cell sectors, and cooperative gain is obtained; while the channel information and traffic data is not or is less fed back between the different-cell sectors, and latency of cooperative communication between the cells is decreased and the throughput and system performance for user at sector edge are increased. The invention also proposes a unique technique for enabling the system to switch among multiple cooperating types, for example network-MIMO and Co-MIMO. It improves the attraction and competitiveness of multi-cell MIMO in IEEE 802.16m, LTE+ and IMT-Advanced. The invention also has certain robustness for the transmission latency in the internetwork between the base stations.

Brief description of the drawings

Other features, objective and advantage of the invention will become obvious by reading the detailed description to the non-limiting embodiments with reference to the following drawings:

Fig. 1 is the network architecture of the network-MIMO in the art;
Fig. 2 is the network architecture of the Co-MIMO in the art;
Fig. 3 is the topology of the cells with sectors in the wireless network, according to an embodiment of the invention;
Fig. 4 shows the topology in which the sector 11 cooperates with sector 13 or 22 to provide multi-sector cooperative communication for the mobile terminal B, according to an embodiment of the invention;
Fig. 5 shows the method in the base station equipment A of providing multi-sector cooperative communication for the mobile terminal B in its dominated sector 11, according to an embodiment of the invention;
Fig. 6 schematically shows the base band boards (base station equipments), dominating each sector in one cell respectively, exchange traffic data and channel state information via inter-baseband board high speed cables;
Fig. 7 shows the block diagram and operation flow of the device in base station equipment A for providing multi-sector cooperative communication for the mobile terminal B in the dominated sector 11, according to an embodiment of the invention.

In the drawings, same or similar reference signs denote the same or similar components.

Detailed embodiment of the invention

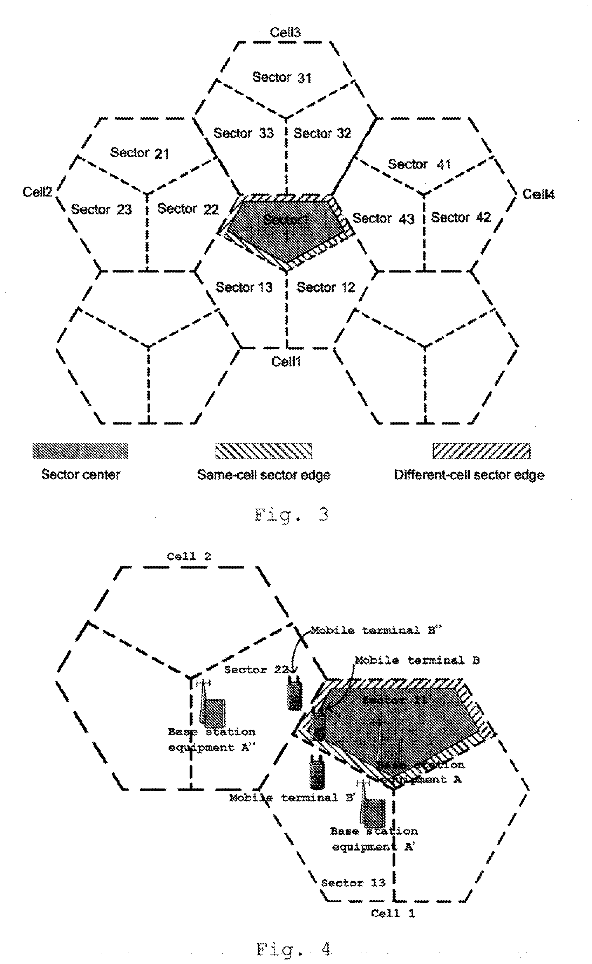

The following part will elucidate the embodiment of the invention from the view point of method, by referring to fig. 3 to fig. 6.
As shown in Figure 3, according to the interference, from neighboring sectors, affecting the mobile terminal in a sector, the coverage area of a sector in a cellular system can be divided into three parts : sector center, same-cell sector edge and different-cell sector edge. Generally speaking, due to the fading of the radio signal, the radio channel at the sector center would not be affected by the signal from neighboring sectors; while the radio channels at the same-cell sector edge or the different-cell sector edge might be interfered by the signal from the neighboring sectors. However, the inter-sector interference affected at the same-cell sector edge is different from that at the different-cell sector edge: the inter-sector interference affected at the same-cell sector edge is coming from a neighboring sector in the same cell, while the inter-sector interference affected at the different-cell sector edge is coming from a neighboring sector in another cell. According to the invention, for mobile terminals at the sector center, since that it would not be interfered by neighboring sectors, the single sector communication is provided instead of multi-sector MIMO utilizing the neighboring sectors; for mobile terminals at the sector edge, different types of multi-sector MIMO can be selected according to the different types of available neighboring sectors. The following part will take sector 11 as an example. As shown in Fig. 4, the sector 11 is dominated by a base station equipment A, a mobile terminal B is located at the sector edge, and the base station equipment A provides multi-sector MIMO communication for the mobile terminal B. It should be noted that, the invention takes multi-sector MIMO communication as an example to elucidate the application of the invention in the multi-sector cooperative communication technology, but the invention is not limited to the multi-sector MIMO technology and is applicable for any other multi-sector cooperative communication. Additionally, the invention is not limited to the network topology shown in Fig. 3, and is applicable for any other network topologies.

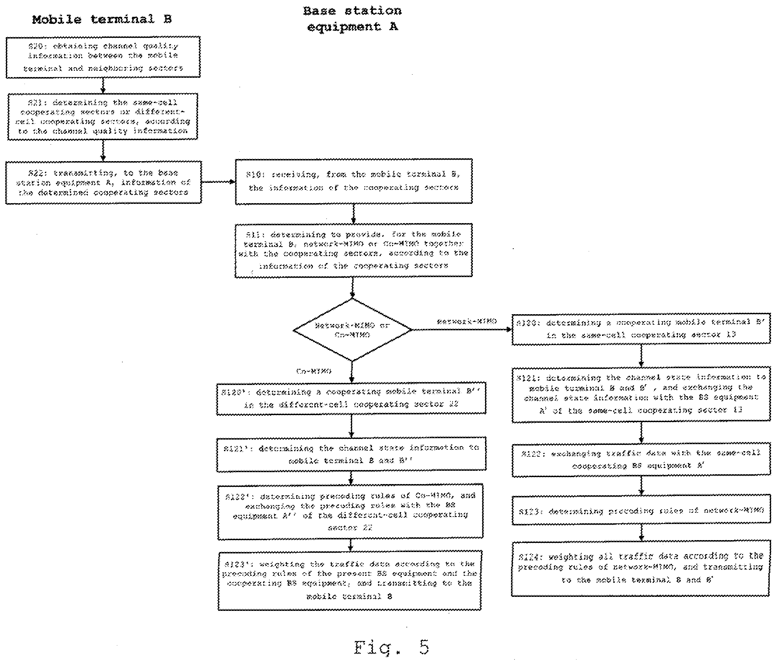

As shown in Fig. 5, at first, in step S10, the base station equipment A determines the cooperating sectors of the mobile terminal B.

In one embodiment, the cooperating sectors of the mobile terminal B is determined and provided for the base station equipment A by the mobile terminal B itself. Specifically, in step S20, the mobile terminal B obtains channel quality information between the mobile terminal and neighboring sectors. For example, the mobile terminal B measures the level of the interference signal from neighboring sectors, according to the received preamble or pilot transmitted by the neighboring sectors and carrying the feature of the sectors.

Then, in step S21, the mobile terminal B determines the cooperating sectors of the mobile terminal B, according to channel quality information between the mobile terminal B and the neighboring sectors.

Specifically, in case that the mobile terminal B is located at the same-cell sector edge neighboring sector 13 which is in the same cell 1 as sector 11, the mobile terminal B determines the neighboring sector 13 as a same-cell cooperating sector of the mobile terminal B in case that the mobile terminal B judges that the channel quality between the mobile terminal B and the base station equipment A' of the sector 13 satisfies a first condition. In one case, the first condition could be that the communication quality such as the received signal strength indication (RSSI) from (the base station equipment A' dominating) the neighbor sector 13 to the mobile terminal B is greater than a predefined threshold such as a certain amount of dBs, which means that the interference signal from the sector 13 is relatively strong and the present sector 11 could use the sector 13 to carry out multi-sector MIMO communication; in another case, the first condition could be that the difference between the signal strength from the base station equipment A' to the mobile terminal B on the one hand and the signal strength from the base station equipment A to the mobile terminal B on the other hand is greater than a predefined threshold such as a certain amount of dBs, which also means that the interference signal from the sector 13 is relatively strong and the present sector 11 could use the sector 13 to carry out multi-sector MIMO communication. It should be understood that in the later case, the mobile terminal B also needs to measure the signal strength from the base station equipment A to the mobile terminal B.

In case that the mobile terminal B is located at the different-cell sector edge neighboring sector 22 which is in a cell 2 different from cell 1 where the sector 11 is located, the mobile terminal B determines the neighboring sector 22 as a different-cell cooperating sector of the mobile terminal B in case that the mobile terminal B judges that the channel quality between the mobile terminal B and the base station equipment A" of the sector 22 satisfies a second condition. In one case, the second condition could be that the signal strength from (the base station equipment A" dominating) the neighbor sector 22 to the mobile terminal B is greater than a predefined threshold such as a certain amount of dBs, which means that the interference signal from the sector 22 is relatively strong and the present sector 11 could use the sector 22 to carry out multi-sector MIMO communication; in another case, the second condition could be that the difference between the signal strength from the base station equipment A" to the mobile terminal B on the one hand and the signal strength from the base station equipment A to the mobile terminal B on the other hand is greater than a predefined threshold such as a certain amount of dBs, which also means that the interference signal from the sector 22 is relatively strong and the present sector 11 could use the sector 22 to carry out multi-sector MIMO communication.

It should be noted that the first condition and second condition, such as the thresholds, respectively for determining the same-cell cooperating sector and the different-cell cooperating sector can be either same or different. Besides, in case that the mobile terminal B is affected by strong interference from the same-cell sector 13 and the neighboring different-cell sector 22, the mobile terminal B could preferably select the same-cell sector 13 as its cooperating sector so as to improve gain of multi-sector MIMO. Of course, the mobile terminal could also select the different-cell sector as its cooperating sector or select both of them as the cooperating sectors, according to selection rules.

After that, in step S22, the mobile terminal B transmits, to the base station equipment A, information of the selected cooperating sectors, such as the identification of the sectors and their signal strengths to the mobile terminal B.

In this manner, in step S10, the base station equipment A receives, from the mobile terminal B, the information of the cooperating sectors.

In another embodiment, the base station equipment A selects proper cooperating sector according to the channel quality information reported by the mobile terminal B and the schedule situation of the present sector. Specifically, similar to the above step S20, the mobile terminal B measures the channel quality information from the neighboring one or more sectors to the mobile terminal B. And the mobile terminal B transmits, to the base station equipment A, the identification of the one or more neighboring sectors and their corresponding channel quality information. Then, in step S100, the base station equipment A receives, from the mobile terminal B, the channel quality information from the respective neighboring one or more sectors to the mobile terminal B.

Then, in step S101, the base station A determines one or more cooperating sectors, according to the channel quality information from the neighboring one or more sectors to the mobile terminal B.

Similar to the above step S21, in case that a candidate sector 13 in the same cell 1 exists in the one or more neighboring sectors, and the channel quality between the mobile terminal B and the sector 13 satisfies a first condition, the base station equipment A may determine the candidate sector 13 as a same-cell cooperating sector.

In case that a candidate sector 22 in a different cell exists in the one or more neighboring sectors, and the channel quality between the mobile terminal B and the sector 22 satisfies a second condition, the base station equipment A may determine the candidate sector 22 as a different-cell cooperating sector.

Further, in case that the same-cell neighboring sector 13 satisfying the first condition and the different-cell neighboring sector 22 satisfying the second condition exist simultaneously, the base station equipment A has the determination right: it could select the same-cell neighboring sector 13 as the cooperating sector of the mobile terminal B for improving the gain of multi-sector MIMO. Of course, the base station equipment A could select the different-cell neighboring sector as the cooperating sector based on multi-sector MIMO scheduling such as for equalizing MIMO gain, or it could select both of them as the cooperating sectors or provide single sector communication for the mobile terminal B without selecting any one.

After determining the cooperating sector of the mobile terminal B, in step S11, the base station equipment A determines, according to predefined rules, the type of the MIMO communication provided for the mobile terminal B cooperatively with the cooperating sectors, based on the information of the cooperating sectors.

Specifically, in case that the cooperating sector is the same-cell cooperating sector 13, the base station equipment A determines to cooperate with this sector to provide network-based multi-sector MIMO communication for the mobile terminal B; in case that the cooperating sector is the different-cell cooperating sector 22, the base station equipment A determines to cooperate with this sector to provide collaboration-based multi-sector MIMO communication for the mobile terminal B. And when the cooperating sector comprises same-cell cooperating sectors and different-cell cooperating sectors simultaneously, the base station equipment A could determine to provide network-based multi-sector MIMO together with the same-cell cooperating sector, and provide collaboration-based multi-sector MIMO together with the different-cell cooperating sector.

After determining the type of cooperative communication, in step S12, the base station equipment A cooperates with the cooperating sector and provides, for the mobile terminal B, the multi-sector MIMO communication of the corresponding determined type. The description firstly takes providing network-MIMO communication as an example.

In step S120, the base station equipment A determines a cooperating mobile terminal B' in the same-cell cooperating sector 13 as the cooperating mobile terminal sharing radio resource with the mobile terminal B, according to criteria such as maximizing channel capacity, maximizing transmitting rate or minimizing inter sector interference. The base station equipment A would communicate with the base station equipment A' dominating sector 13 to determine the proper mobile terminal B'. In case that no proper cooperating mobile terminal can be found, the sector 11 could serve the mobile terminal B together with sector 13 via single user precoding. The way of determining the cooperating mobile terminal in network-MIMO is well known for those skilled in the MIMO field, and the description will not give further details.

Then, in step S121, the base station equipment A determines the first channel state information to the mobile terminal B and the cooperating mobile terminal B', and obtains the second channel state information between the base station equipment A' of the same-cell cooperating sector 13 to the mobile terminal B and the cooperating mobile terminal B'. Specifically, the base station equipment A and A' respectively allocate orthogonal uplink communication resources for the mobile terminal B and cooperating mobile terminal B' to transmit the sounding signals to the base station equipments A and A'; the base station equipments A and A' estimate the respective channel matrices to the mobile terminal B and to the cooperating mobile terminal B', according to the sounding signal. For convenience, H11 and H12 are used to denote the channel matrices from the base station equipment A to the mobile terminal B and to the cooperating mobile terminal B'; and H21 and H22 are used to denote the channel matrices from the base station equipment A' to the mobile terminal B and to the cooperating mobile terminal B'. In case that each base station equipment has four transmitting antennas and each mobile terminal has two receiving antennas, all of H11, H12, H21 and H22 are 2x4 matrices. After determining the channel matrix, the base station equipment A and the base station equipment A' communicate with each other to exchange the channel matrices.

Additionally, in step S122, the base station equipment A obtains the cooperating traffic data S21 and S22 from the same-cell cooperating base station equipment A' to the dominated cooperating mobile terminal B', and provides, for the same-cell cooperating base station equipment A', the traffic data S11 and S12 in the present sector from the base station equipment A to the mobile terminal B. It should be noted that step S121 and S122 don't have sequential relation.

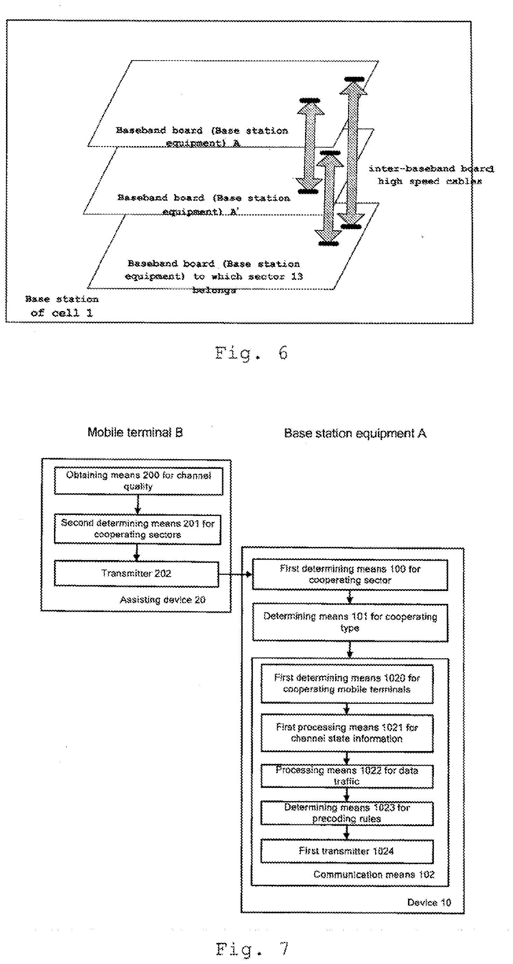

Preferably, in the above step S121 and step S122, as shown in Fig. 6, the present base station equipment A uses interconnection between base station equipments, such as the inter-baseband board high-speed cables to communicate with the cooperating base station equipment A', in order to exchange channel matrix and traffic data. Compared with internetwork between base stations such as the backbone network, the interconnection between base station equipments generally has faster transmitting rate that can realize fast communication of all traffic data and channel matrix with less latency, thus it is guaranteed that the base station equipments A and A' provide network-MIMO communication for the mobile terminals B and B'.

Then, in step S123, the base station equipment A and A' determines the precoding rule of the network-MIMO communication according to predefined method, based on the channel matrices H11 and H12, and channel matrices H21 and H22. Specifically, it can determine the precoding matrix H by using algorithms such as ZF, BD and MMSE. The description uses ZE algorithm as an example. Matrix H is constituted according to the following formula:

$$H = \begin{bmatrix} (H11)_{2\times4} & (H21)_{2\times4} \\ (H12)_{2\times4} & (H22)_{2\times4} \end{bmatrix}_{4\times8} \qquad (1)$$

Then the weighting matrix W is:

$$W_{8\times4} = H^+ (HH^+)^{-1} \qquad (2)$$

The above takes the example that the two base station equipments carry out network-MIMO communication and use ZF algorithm for precoding to elucidate the embodiment. It should be understood that the invention is also applicable for a plurality of base station equipments to carry out network-MIMO communication and to use other precoding algorithms, and the description will not give further details.

At last, in step S124, the base station equipment A weights the traffic data S11 and S12 of the present sector as well as the cooperating traffic data S21 and S22 according to the determined precoding rule, and transmits them to the mobile terminal B and the cooperating mobile terminal B'. Specifically, the transmitted signal X is defined by the following formula:

$$X_{8\times1} = W_{8\times4} \cdot \begin{bmatrix} S11 \\ S12 \\ S21 \\ S22 \end{bmatrix} \qquad (3)$$

Wherein the base station equipment A of sector 11 transmits $\begin{bmatrix} X(1) \\ X(2) \\ X(3) \\ X(4) \end{bmatrix}$ by using its four transmitting antennas, and the base station equipment A' of cooperating sector 13 transmits $\begin{bmatrix} X(5) \\ X(6) \\ X(7) \\ X(8) \end{bmatrix}$ by using its four transmitting antennas.

At the mobile terminals B and B' , since the base station equipments have carried out multi-user precoding, the data flows of the several users are orthogonal, thus the existing receivers can be re-used without the addition of specific detecting means.

The above part uses an example in which the base station equipment A and the cooperating base station equipment A' provide network-MIMO communication to describe the invention. It should be noted that the invention is not limited by the example of network-MIMO, and any multi-sector cooperative schemes based on the complete channel state information or complete traffic data fall into the protection scope of the invention. The following part will describe an example in which the base station equipment A and the cooperating base station equipment A" provide Co-MIMO communication for the mobile terminal B.

In step S120', similar to the above step S120, the base station equipment A determines a cooperating mobile terminal B" in the different-cell cooperating sector 22, according to criteria such as maximizing channel capacity, maximizing transmitting rate or minimizing inter sector interference. In case that no proper cooperating mobile terminal can be found, the sector 11 could serve the mobile terminal B together with sector 22 via single user precoding. The method for determining a cooperating mobile terminal in Co-MIMO is well known for those skilled in the MIMO field, and the description will not give further details.

Then, similar to the above step S121, in step S121', the base station equipment A determines the third channel state information from the present base station equipment to the mobile terminal B and the cooperating mobile terminal B". Specifically, the base station equipments A and A" respectively allocate orthogonal uplink communication resources for the mobile terminal B and cooperating mobile terminal B" to transmit the sounding signal to the base station equipments A and A". The base station equipments A and A" estimate the respective channel matrices from the base station equipment to the mobile terminal B and cooperating mobile terminal B", according to the sounding signals. For convenience, H11 and H12 are used to denote the channel matrices from the base station equipment A to the mobile terminal B and the cooperating mobile terminal B' ' ; and H21 and H22 are used to denote the channel matrices from the base station equipment A" to the mobile terminal B and the cooperating mobile terminal B". In case that each base station equipment has four transmitting antennas and each mobile terminal has two receiving antennas, all of H11, H12, H21 and H22 are 2x4 matrices.

Preferably, the base station equipment A and the base station equipment A" exchange information related to channel quality between them and the mobile terminal B and the cooperating mobile terminal B", for example long-term channel quality information for assisting the scheduling of the base station such as SINR (Signal to Interference-plus-Noise Ratio) and RSSI (Received signal strength indication), so as to carried out a certain degree of user scheduling.

Then, in step S122' the base station equipment determines a second precoding rule for the Co-MIMO communication according to a predefined method, based on the determined channel matrices. For the mobile terminals B and B", each mobile terminal can receive two data flows, and each of the two data flows comes from either sector 11 or sector 22. The base station equipment A obtains a weighting matrix for weighting traffic data S11 and S12 based on the channel matrices H11 and H12, according to multi-user precoding algorithms such as ZF, BD and MMSE. Taking ZF algorithm as an example, the matrix H is constituted according to the following formula:

$$H = \begin{bmatrix} (H11)_{2\times4} \\ (H12)_{2\times4} \end{bmatrix}_{4\times4} \quad\quad (4)$$

Then the weighting matrix W1 used by the base station equipment A is:

$$W1_{4\times4} = H^+(HH^+)^{-1} \quad\quad (5)$$

Similarly, for the base station equipment A", the following formula exists:

$$H = \begin{bmatrix} (H21)_{2\times4} \\ (H22)_{2\times4} \end{bmatrix}_{4\times4} \qu\quad (6)$$

Then the weighting matrix is obtained:

$$W2_{4\times4} = H^+(HH^+)^{-1} \qu\quad (7)$$

After that, the base station equipment A exchanges the third column W1(:,3) of its weighting matrix W1 for the first column W2(:,1) of the weighting matrix W2 of the base station equipment A" of the different-cell cooperating sector.

Preferably, in the above step S121' and step 122', the base station equipment A uses internetwork between the base stations, such as backbone network, to exchange the information related to the channel quality and/or precoding rules with the cooperating base station equipment A". Since the data amount of the exchange of the information related to the channel quality and/or precoding rules is relatively small, thus it has lower bandwidth requirement for the backbone network and has smaller transmission latency, whereby the performance of Co-MIMO communication is guaranteed without jamming the backbone network.

At last, in step S123', the base station equipment A weights the traffic data S11 and S12 of the present sector based on the weighting matrices W1 and W2, and transmits the weighted signals to the mobile terminal B. Specifically, the transmitted signal X is defined by the following formula:

$$X1_{4\times1} = \begin{bmatrix} W1(:,1) & W2(:,1) \end{bmatrix} \cdot \begin{bmatrix} S11 \\ S12 \end{bmatrix} \qquad (8)$$

The base station equipment A of sector 11 uses its four transmitting antennas to transmit X1 to the mobile terminal B. Similarly, the base station equipment A" of sector 22 transmits $X2_{4\times1} = \begin{bmatrix} W1(:,3) & W2(:,3) \end{bmatrix} \cdot \begin{bmatrix} S21 \\ S22 \end{bmatrix}$ to the mobile terminal B". At the mobile terminals B and B", since the base station equipments have carried out multi-user precoding, the data flows of the multiple users are orthogonal, the existing receivers can be re-used without the addition of specific detecting means.

In order to analyze the performance gain of the invention, the inventor carries out system level simulation for the invention by using simulation tools of WiMAX multi-sector MIMO system. The parameters for the system simulation are listed in the following table:

Table 1

| cell and sector division | WiMAX DL, 7 cells, 3 sectors per cell | Antenna gain of mobile terminal | 4.1dBi |
|---|---|---|---|
| Fading channel | SCM Urban Micro | Coverage probability | 90% based on SISO (Single Input Single Output) link budget |
| Centre Frequency | 2.35G | FFT(Fast Fourier Transform) size /active sub-carrier | 1024 / 840 |
| Sub-carrier permutation | PUSC defined in IEEE 16e, full loaded of neighboring cell | Mobile terminal implementation loss | 5dB |
| Antenna azimuth | 3 sector antenna defined in 3GPP | Mobile terminal noise figure | 5dB |
| Cell radius | 350m | Height of base station | 30m |
| Path loss model | Hata model (Kc=-2) | Loss of wall oenetration | 10dB |
| frequency reuse | 1 | Baseline mobile terminal antenna # | 2 |
| User per sector | 10 | Shadowing type | Correlated |
| Sub-channel per user | 3 | Shadowing variance | 8.0dB |
| base station cable loss | 0 dB | PSD(Power spectrum density) of noise | -174.3 dBm/Hz |
| RF filter loss | 0.5 dB | Height of mobile terminal | 1.5m |
| Scheduling | Random scheduling | Effective SINR | Capacity based |
| Channel codec | CTC(cyclic Turbo code) | Traffic model | Best-effort |
| STC(Space-Time coding)/SM (Spatial Multiplexing) | Max average capacity criteria over the allocated time-frequency | HARQ(Hybrid Automatic ReQuest) mechanism | Synchronous HARQ with max retransmission # of 3, Chase combining |
| switching criteria | resource | | |

(continued)

| cell and sector division | WiMAX DL, 7 cells, 3 sectors per cell | Antenna gain of mobile terminal | 4.1dBi |
|---|---|---|---|
| Antenna configuration | Unified antenna polarization with antenna element spacing of 0.5λ | MCS (Modulation and Coding Scheme) | Max Rep. # of 3, QPSK 3/4, 16QAM 1/2, 3/4 64QAM 2/3, ¾ |
| Tx power of base station | 35dBm per PA (Power Amplifier) | Antenna gain of base station | 17dBi |
| Channel estimation | Channel estimation based on real channel estimator | MIMO detector | MMSE(Minimum Mean Square Error) |
| PHY overhead | 37% | base station CSI Acquisition | Ideal sounding |

In the system of the invention used in the simulation, 4x2 MIMO+BF (beamforming) communications are provided for the single user transmission at the sector center; 4x2 network-MIMO communication is provided for mobile terminals at the same-cell sector edge; 4x2 Co-MIMO communication is provided for mobile terminals at the different-cell sector edge, and it is assumed that the system can ideally switch between these two types of MIMO. The inventor also simulates the Co-MIMO system for reference, in which 4x2 MIMO+BF is used for single user transmission, and 4x2 Co-MIMO is used for mobile terminals at the same-cell sector edge and at the different-cell sector edge. The simulation results in table 2 shows the sector average spectral efficiency (SE) and sector-edge spectral efficiency for different interference thresholds (thresholds for the difference between the signal strength from the interfering sector to the mobile terminal and the signal strength from the serving sector to the mobile terminal) for determining the cooperating sector.

**Table 2**

| Bps/Hz/Sector | interference threshold = 2dB | | interference threshold = 4dB | |
|---|---|---|---|---|
| | Average SE | sector-edge SE | Average SE | sector-edge SE |
| Co-MIMO | 1.27 | 0.06 | 1.39 | 0.062 |
| The invention | 1.57 | 0.22 | 1.84 | 0.23 |

From the simulation result, it can be seen that the invention improves the average sector spectral efficiency and the sector-edge spectral efficiency significantly, compared with Co-MIMO. In the invention, increasing interference threshold can improve the performance gain especially the sector average spectral efficiency, in the cost of consuming more bandwidth of the interconnection between the base station equipments.

After analyzing the improvement in spectral efficiency brought by the invention, the inventor will analyze the bandwidth of the backbone network saved by the invention. Let the amount of the cooperating base station equipments be M, the amount of transmitting antennas in the base station equipment be Nt, the amount of receiving antennas in the mobile terminal be Nr, and the amount of users for each base station equipment be K. Then the overheads for the exchange of the traffic data and the channel state information (CSI) in network-MIMO are listed in table 3.

Table 3

| Data | $M \times (M-1) \times K$ |
|---|---|
| OSI | $M \times K$ channel matrices of size $Nr \times Nt$ |
| OQI | $M \times K$ |
| Sum | $M \times M \times K + M \times K \times Nr \times Nt$ |

In transmission system of Gbps level, the throughout at different-cell sector edge is generally 30Mbps (23% of the average sector throughout). When M=K=Nr=2 and Nt=4, if each symbol is quantized by 16-bit length and transmitted via backbone network, the bandwidth of the backbone network needs to be up to 12.8Gbps. While in the invention, such a huge data amount is switched to be transmitted via the high speed interconnection between the base station equipments within the cell, thus the cost of the system is decreased significantly.

To sum up, the invention provides an efficient solution for multi-cell/multi-sector cooperative communications such as the MIMO communication. It has relatively higher spectral efficiency and saves a great amount of backhaul bandwidth for the backbone network between the base stations.

It can be understood that, in a varied embodiment, the base station equipment can determine to provide, for the mobile terminal, whether single base station communication or multi-sector cooperative communication, according to state of the interference from neighboring sector to the mobile terminal. Specifically, in case that the mobile terminal is located at the sector center, and it is not interfered by the neighboring sector or the interference received is less than a certain threshold, the base station equipment can determine to provide for the mobile terminal the single base station communication such as the traditional MIMO communication, to be specific: to select Single-user MIMO, or Multi-user MIMO; or MISO (multiple input single output) or SISO (single input single output), according to different optimization rules. And in case that the mobile terminal at the edge of the sector receives strong interference from the neighboring sector, the base station equipment can determine to provide for the mobile terminal the multi-sector cooperative communication, and carries out the above steps.

The above elucidates the embodiments in which the base station provides corresponding preferable communication for the mobile terminal, when the mobile terminal is located respectively at the center of cell, the same-cell sector edge or different-cell sector edge. It should be understood that the base station equipment would dynamically switch the type of the multi-sector cooperative communication when the mobile terminal itself moves from locations such as the same-cell sector edge to other locations such as the different-cell sector edge.

The above elucidates the embodiment of the invention from the aspect of method. The following will elucidate the embodiment of the invention from the aspect of device by referring to Fig. 7.

As show in Fig. 7, the base station equipment A comprises a device 10 for providing multi-sector cooperative communications for a mobile terminal in its dominated sector. The device 10 comprises a first determining means 100 for cooperating sector, a determining means 101 for cooperating type and a communication means 102. The communication means 102 can further comprises a first determining means 1020 for cooperating mobile terminals, a first processing means 1021 for channel state information, a processing means 1022 for data traffic, a determining means 1023 for precoding rules and a first transmitter 1024, for providing network-based MIMO communication; or can further comprises (not shown in the figure. The mobile terminal B comprises an assisting device 20 for assisting the base station equipment of a sector in which the mobile terminal is located, to provide a multi-sector cooperative communication for the mobile terminal. The device 20 comprises an obtaining means 200 for channel quality, a second determining means 201 for cooperating sectors and a transmitter 202. The wireless network topology as shown in Fig. 3 and the scenario that base station equipment A provides multi-sector cooperative communication for the mobile terminal B at sector edge as shown in Fig. 4 are taken as example again to elucidate the embodiment. It should be noted that the invention is not limited to this, and is applicable for other wireless network topologies and multi-sector cooperating scenarios.

At first, the first determining means 100 for cooperating sector of the base station equipment A determines the cooperating sectors of the mobile terminal B.

In one embodiment, the cooperating sectors of the mobile terminal B is determined and provided for the base station equipment A by the mobile terminal B itself. Specifically, the obtaining means 200 for channel quality of the mobile terminal B obtains channel quality information between the mobile terminal and neighboring sectors. For example, the mobile terminal B measures the level of the interference signal from neighboring sectors, according to the received preamble or pilot transmitted by the neighboring sectors and carrying the feature of the sectors.

Then, the second determining means 201 for cooperating sector determines the cooperating sectors of the mobile terminal B, according to channel quality information between the mobile terminal B and the neighboring sectors.

Specifically, in case that the mobile terminal B is located at the same-cell sector edge neighboring sector 13 which is in the same cell 1 as sector 11, the second determining means 201 for cooperating sector determines the neighboring sector 13 as a same-cell cooperating sector of the mobile terminal B in case that the second determining means 201 for cooperating sector judges that the channel quality between the mobile terminal B and the base station equipment A' of the sector 13 satisfies a first condition. In one case, the first condition could be that the communication quality such as the received signal strength indication (RSSI) from (the base station equipment A' dominating) the neighbor sector 13 to the mobile terminal B is greater than a predefined threshold such as a certain amount of dBs, which means that the interference signal from the sector 13 is relatively strong and the present sector 11 could use the sector 13 to carry out multi-sector MIMO communication; in another case, the first condition could be that the difference between the signal strength from the base station equipment A' to the mobile terminal B on the one hand and the signal strength from the base station equipment A to the mobile terminal B on the other hand is greater than a predefined threshold such as a certain amount of dBs, which also means that the interference signal from the sector 13 is relatively strong and the present sector 11 could use the sector 13 to carry out multi-sector MIMO communication. It should be understood that in the later case, the mobile terminal B also needs to measure the signal strength from the base station equipment A to the mobile terminal B.

In case that the mobile terminal B is located at the different-cell sector edge neighboring sector 22 which is in a cell 2 different from cell 1 where the sector 11 is located, the second determining means 201 for cooperating sector determines the neighboring sector 22 as a different-cell cooperating sector of the mobile terminal B in case that the second determining means 201 for cooperating sector judges that the channel quality between the mobile terminal B and the base station equipment A" of the sector 22 satisfies a second condition. In one case, the second condition could be that the signal strength from (the base station equipment A" dominating)the neighbor sector 22 to the mobile terminal B is greater than a predefined threshold such as a certain amount of dBs, which means that the interference signal from the sector 22 is relatively strong and the present sector 11 could use the sector 22 to carry out multi-sector MIMO communication; in another case, the second condition could be that the difference between the signal strength from the base station equipment A" to the mobile terminal B on the one hand and the signal strength from the base station equipment A to the mobile terminal B on the other hand is greater than a predefined threshold such as a certain amount of dBs, which also means that the interference signal from the sector 22 is relatively strong and the present sector 11 could use the sector 22 to carry out multi-sector MIMO communication.

It should be noted that the first condition and second condition, such as the thresholds, respectively for determining the same-cell cooperating sector and the different-cell cooperating sector can be either same or different. Besides, in case that the mobile terminal B is affected by strong interference from the same-cell sector 13 and the neighboring different-cell sector 22, the mobile terminal B could preferably select the same-cell sector 13 as its cooperating sector so as to improve gain of multi-sector MIMO. Of course, the mobile terminal could also select the different-cell sector as its cooperating sector or select both of them as the cooperating sectors, according to selection rules.

After that, the transmitter 201 transmits, to the base station equipment A, information of the selected cooperating sectors, such as the identification of the sectors and their signal strengths to the mobile terminal B.

In this manner, the first determining means 100 for cooperating sectors of the base station equipment A receives, from the mobile terminal B, the information of the cooperating sectors.

In another embodiment, the base station equipment A selects proper cooperating sector according to the channel quality information reported by the mobile terminal B and the schedule situation of the present sector. The first determining means 100 for cooperating sectors further comprises a receiver 1000 for channel quality. Specifically, the mobile terminal B measures the channel quality information from the neighboring one or more sectors to the mobile terminal B. And the mobile terminal B transmits, to the base station equipment A, the identification of the one or more neighboring sectors and their corresponding channel quality information. Then, the receiver 1000 for channel quality of the base station equipment A receives, from the mobile terminal B, the channel quality information from the neighboring one or more sectors to the mobile terminal B.

Then, the first determining means 100 for cooperating sectors determines one or more cooperating sectors, according to the channel quality information from the neighboring one or more sectors to the mobile terminal B.

Similar to the above second determining means 201 for cooperating sectors, in case that a candidate sector 13 in the same cell 1 exists in the one or more neighboring sectors, and the channel quality between the mobile terminal B and the sector 13 satisfies a first condition, the first determining means 100 for cooperating sectors may determine the candidate sector 13 as a same-cell cooperating sector.

In case that a candidate sector 22 in a different cell exists in the one or more neighboring sectors, and the channel quality between the mobile terminal B and the sector 22 satisfies a second condition, the first determining means 100 for cooperating sectors may determine the candidate sector 22 as a different-cell cooperating sector.

Further, in case that the same-cell neighboring sector 13 satisfying the first condition and the different-cell neighboring sector 22 satisfying the second condition exist simultaneously, the first determining means 100 for cooperating sectors has the determination right: it could select the same-cell neighboring sector 13 as the cooperating sector of the mobile terminal B for improving the gain of multi-sector MIMO. Of course, the first determining means 100 for cooperating sectors could select the different-cell neighboring sector as the cooperating sector based on multi-sector MIMO scheduling such as for equalizing MIMO gain, or it could select both of them as the cooperating sectors or provide single sector communication for the mobile terminal B without selecting any one.

After the cooperating sector of the mobile terminal B is determined, the determining means 101 for cooperation type determines, according to predefined rules, the type of the MIMO communication provided for the mobile terminal B cooperatively with the cooperating sectors, based on the information of the cooperating sectors.

Specifically, in case that the cooperating sector is the same-cell cooperating sector 13, the determining means 101 for cooperation type determines to cooperate with this sector to provide network-based multi-sector MIMO communication for the mobile terminal B; in case that the cooperating sector is the different-cell cooperating sector 22, the determining means 101 for cooperation type determines to cooperate with this sector to provide collaboration-based multi-sector MIMO communication for the mobile terminal B. And when the cooperating sector comprises same-cell cooperating sectors and different-cell cooperating sectors simultaneously, the determining means 101 for cooperation type could determine to provide network-based multi-sector MIMO together with the same-cell cooperating sector, and provide collaboration-based multi-sector MIMO together with the different-cell cooperating sector.

After the type of cooperative communication is determined, the device 10 cooperates with the cooperating sectors and provides, for the mobile terminal B, the multi-sector cooperative communication of the corresponding determined type. The description firstly takes providing network-MIMO communication as an example.

The first determining means 1020 for cooperating mobile terminal determines a cooperating mobile terminal B' in the same-cell cooperating sector 13 as the cooperating mobile terminal sharing radio resource with the mobile terminal B, according to criteria such as maximizing channel capacity, maximizing transmitting rate or minimizing inter sector interference. The first determining means 1020 for cooperating mobile terminal would communicate with the base station equipment A' dominating sector 13 to determine the proper mobile terminal B' . In case that no proper cooperating mobile terminal can be found, the sector 11 could serve the mobile terminal B together with sector 13 via single user precoding. The way of determining the cooperating mobile terminal in network-MIMO is well known for those skilled in the MIMO field, and the description will not give further details.

Then, the first processing means 1021 for channel state information determines the first channel state information to the mobile terminal B and the cooperating mobile terminal B' , and obtains the second channel state information between the base station equipment A' of the same-cell cooperating sector 13 to the mobile terminal B and the cooperating mobile terminal B' . Specifically, the base station equipments A and A' respectively allocate orthogonal uplink communication resources for the mobile terminal B and cooperating mobile terminal B' to transmit the sounding signals to the base station equipments A and A'; the base station equipments A and A' estimate the respective channel matrices to the mobile terminal B and cooperating mobile terminal B', according to the sounding signals. For convenience, H11 and H12 are used to denote the channel matrix from the base station equipment A to the mobile terminal B and to the cooperating mobile terminal B' ; and H21 and H22 are used to denote the channel matrices from the base station equipment A' to the mobile terminal B and to the cooperating mobile terminal B'. In case that each base station equipment has four transmitting antennas and each mobile terminal has two receiving antennas, all of H11, H12, H21 and H22 are 2x4 matrices. After determining the channel matrix, the base station equipment A and the base station equipment A' communicate with each other to exchange the channel matrices.

Additionally, the processing means 1022 for data traffic obtains the cooperating traffic data S21 and S22 from the same-cell cooperating base station equipment A' to the dominated cooperating mobile terminal B' , and provides, for the same-cell cooperating base station equipment A' , the traffic data S11 and S12 in the present sector from the base station equipment A to the mobile terminal B. It should be noted that the first processing means 1021 for channel state information and the processing means 1022 for data traffic don't have sequential relation in their operations.

Preferably, as shown in Fig. 6, the first processing means 1021 for channel state information and the processing means 1022 for data traffic use interconnection between base station equipments, such as the inter-baseband board high-speed cables to communicate with the cooperating base station equipment A', in order to exchange channel matrix and traffic data. Compared with internetwork between base stations such as the backbone network, the interconnection between base station equipments generally has faster transmitting rate that can realize fast communication of all traffic data and channel matrix with less latency, thus it is guaranteed that the base station equipments A and A' provide network-MIMO communication for the mobile terminals B and B'.

Then, the determining means 1023 for precoding rules determines the precoding rule of the network-MIMO communication according to predefined method, based on the channel matrices H11 and H12, and channel matrices H21 and H22. Specifically, it can determine the precoding matrix H by using algorithms such as ZF, BD and MMSE. The description uses ZE algorithm as an example. Matrix H is constituted according to the following formula:

$$\mathrm{H} = \begin{bmatrix} (\mathrm{H}11)_{2\times4} & (\mathrm{H}21)_{2\times4} \\ (\mathrm{H}12)_{2\times4} & (\mathrm{H}22)_{2\times4} \end{bmatrix}_{4\times8} \qquad (1)$$

Then the weighting matrix W is:

$$\mathrm{W}_{8\times4} = \mathrm{H}^{+}\left(\mathrm{H}\mathrm{H}^{+}\right)^{-1} \qquad (2)$$

The above takes the example that the two base station equipments carry out network-MIMO communication and use ZF algorithm for precoding to elucidate the embodiment. It should be understood that the invention is also applicable for a plurality of base station equipments to carry out network-MIMO communication and to use other precoding algorithms, and the description will not give further details.

At last, the first transmitter 1024 weights the traffic data S11 and S12 of the present sector as well as the cooperating traffic data S21 and S22 according to the determined precoding rule, and transmits them to the mobile terminal B and the cooperating mobile terminal B' . Specifically, the transmitted signal X is defined by the following formula:

$$X_{8 \times 1} = W_{8 \times 4} \cdot \begin{bmatrix} S11 \\ S12 \\ S21 \\ S22 \end{bmatrix} \qquad (3)$$

Wherein the base station equipment A of sector 11 transmits $\begin{bmatrix} X(1) \\ X(2) \\ X(3) \\ X(4) \end{bmatrix}$ by using its four transmitting antennas, and the base station equipment A' of cooperating sector 13 transmits $\begin{bmatrix} X(5) \\ X(6) \\ X(7) \\ X(8) \end{bmatrix}$ by using its four transmitting antennas.

At the mobile terminals B and B' , since the base station equipments have carried out multi-user precoding, the data flows of the several users are orthogonal, thus the existing receiver can be re-used without the addition of specific detecting means.

The above part uses an example in which the base station equipment A and the cooperating base station equipment A' provide network-MIMO communication to describe the invention. It should be noted that the invention is not limited by the example of network-MIMO, and any network based MIMO schemes based on the complete channel state information or complete traffic data fall into the protection scope of the invention. The following part will describe an example in which the base station equipment A and the cooperating base station equipment A" provides Co-MIMO communication for the mobile terminal B. In this example, the communication means 102 of the device 10 of the base station A comprises a second determining means 1021' for cooperating mobile terminals, a second processing means 1022' for channel state information, a processing means 1023' for precoding rules and a second transmitter 1024'.

Similar to the above first determining means 1021 for cooperating mobile terminals, the second determining means 1021' for cooperating mobile terminals determines a cooperating mobile terminal B" in the different-cell cooperating sector 22, according to criteria such as maximizing channel capacity, maximizing transmitting rate or minimizing inter sector interference. In case that no proper cooperating mobile terminal can be found, the sector 11 could serve the mobile terminal B together with sector 22 via single user precoding. The method for determining a cooperating mobile terminal in Co-MIMO is well known for those skilled in the MIMO field, and the description will not give further details.

Then, the second processing means 1022' for channel state information determines the third channel state information from the present base station equipment to the mobile terminal B and the cooperating mobile terminal B". Specifically, the base station equipments A and A" respectively allocate orthogonal uplink communication resources for the mobile terminal B and cooperating mobile terminal B" to transmit the sounding signals to the base station equipment A. The base station equipment A estimates the respective channel matrices from the base station equipment to the mobile terminal B and cooperating mobile terminal B", according to the sounding signals. For convenience, H11 and H12 are used to denote the channel matrices from the base station equipment A to the mobile terminal B and the cooperating mobile terminal B" ; and H21 and H22 are used to denote the channel matrices from the base station equipment A" to the mobile terminal B and the cooperating mobile terminal B". In case that each base station equipment has four transmitting antennas and each mobile terminal has two receiving antennas, all of H11, H12, H21 and H22 are 2x4 matrices.

Preferably, the second processing means 1022' for channel state information and the base station equipment A" exchange information related to channel quality between them and the mobile terminal B and the cooperating mobile terminal B", for example long-term channel quality information for assisting the scheduling of the base station such as SINR (Signal to Interference-plus-Noise Ratio) and RSSI (Received signal strength indication), so as to carry out a certain degree of user scheduling.

Then, the processing means 1023' for precoding rules determines a second precoding rule for the Co-MIMO communication according to a predefined method, based on the determined channel matrices. For the mobile terminals B and B", each mobile terminal can receive two data flows, and each of the two data flows comes from either sector 11 or sector 22. The base station equipment A obtains a weighting matrix for weighting traffic data S11 and S12 based on the channel matrices H11 and H12, according to multi-user precoding algorithms such as ZF, BD and MMSE. Taking ZF algorithm as an example, the matrix H is constituted according to the following formula:

$$H = \begin{bmatrix} (H11)_{2\times4} \\ (H12)_{2\times4} \end{bmatrix}_{4\times4} \qquad (4)$$

Then the weighting matrix W1 used by the base station equipment A is:

$$W1_{4\times4} = H^+(HH^+)^{-1} \qquad (5)$$

Similarly, for the base station equipment A", the following formula exists:

$$H = \begin{bmatrix} (H21)_{2\times4} \\ (H22)_{2\times4} \end{bmatrix}_{4\times4} \qquad (6)$$

Then the weighting matrix is obtained:

$$W2_{4\times4} = H^+(HH^+)^{-1} \qquad (7)$$

After that, the base station equipment A exchanges the third column W1(:,3) of its weighting matrix W1 for the first column W2(:,1) of the weighting matrix W2 of the base station equipment A" of the different-cell cooperating sector.
Preferably, the second processing means 1022' for channel state information and the processing means 1023' for precoding rules use internetwork between the base stations, such as backbone network, to exchange the information related to the channel quality and/or precoding rules with the cooperating base station equipment A''. Since the data amount of the exchange of the information related to the channel quality and/or precoding rules is relatively small, thus it has lower bandwidth requirement for the backbone network and has smaller transmission latency, whereby the performance of Co-MIMO communication is guaranteed without jamming the backbone network.
At last, the second transmitter 1024' weights the traffic data S11 and S12 of the present sector based on the weighting matrices W1 and W2, and transmits the weighted signals to the mobile terminal B. Specifically, the transmitted signal X is defined by the following formula:

$$X1_{4\times1} = \begin{bmatrix} W1(:,1) & W2(:,1) \end{bmatrix} \cdot \begin{bmatrix} S11 \\ S12 \end{bmatrix} \qquad (8)$$

The second transmitter 1024' uses its four transmitting antennas to transmit X1 to the mobile terminal B. Similarly, the base station equipment A" of sector 22 transmits $X2_{4\times1} = \begin{bmatrix} W1(:,3) & W2(:,3) \end{bmatrix} \cdot \begin{bmatrix} S21 \\ S22 \end{bmatrix}$ to the mobile terminal B". At the mobile terminals B and B', since the base station equipments have carried out multi-user precoding, the data flows of the multiple users are orthogonal, the existing receivers can be re-used without the addition of specific detecting means.
According to the above simulation and analysis, it can be known that the invention proposes a very efficient solution for multi-cell/multi-sector cooperative communications such as MIMO communication. It has high frequency spectrum efficiency and saves a lot of backhaul bandwidth for the backbone network between base stations.
The above describes the embodiments of the invention. It should be noted that the invention is not limited to the above specific embodiments, and those skilled in the art could make numerous variations and modification within the protection scope of the appended claims.

**Claims**

1.  A method, in a base station equipment (A) of a wireless communication network, of providing multi-sector cooperative communications for a mobile terminal (B) in a sector (11) dominated by the base station equipment (A), said sector (11) belonging to a cell (1), the method comprising the steps of:

    i. determining one or more cooperating sectors (13, 22) of the mobile terminal (B);
    ii. determining a type of the multi-sector cooperative communication provided cooperatively with said one or more cooperating sectors (13, 22) for the mobile terminal (B), based on information of said one or more cooperating sectors (13, 22), according to predefined rules;
    iii. cooperating with said one or more cooperating sector (13, 22) and providing, for the mobile terminal (B), the multi-sector cooperative communication of the corresponding determined type, wherein said one or more cooperating sector (13, 22) is one or more same-cell cooperating sector (13) belonging to the same cell as the sector (11), one or more different-cell cooperating sector (22) belonging to a different cell as the sector (11), or comprises said one or more same-cell cooperating sector and said one or more different-cell cooperating sector simultaneously.

2.  The method as claimed in claim 1, wherein said one or more cooperating sectors (13, 22) comprise same-cell cooperating sectors (13) belonging to the same cell (1), and/or different-cell cooperating sectors (22) belonging to a different cell (2), and said step i comprises:

    - receiving (S10), from said mobile terminal (B), the information of said one or more cooperating sectors (13, 22).

3.  The method as claimed in claim 1, wherein said one or more cooperating sectors (13, 22) comprise same-cell cooperating sectors (13) belonging to the same cell (1), and/or different-cell cooperating sectors (22) belonging to a different cell (2), and said step i comprises:

    i1. receiving, from said mobile terminal (B), channel quality information between said mobile terminal (B) and each of the one or more sectors (13, 22) neighboring said mobile terminal (B);
    i2. determining said one or more cooperating sectors (13, 22) according to the channel quality information between said mobile terminal (B) and each of the one or more neighboring sectors (13, 22).

4.  The method as claimed in claim 3, wherein said step i2 comprises:

    - in case that the channel quality between the mobile terminal (B) and one or more candidate sectors (13, 22) in said one or more neighboring sectors (13, 22) belonging to the same cell (1) satisfies a first condition, determining said one or more candidate sectors (13, 22) as said same-cell cooperating sectors (13);
    - in case that the channel quality between the mobile terminal (B) and one or more candidate sectors (13, 22) in said one or more neighboring sectors (13, 22) belonging to a different cell (2) satisfies a second condition, determining said one or more candidate sectors (13, 22) as said different-cell cooperating sectors (22).

5.  The method as claimed in any one of claims 2 to 4, wherein said predefined rules comprises:

    - determining that the base station equipment (A) cooperates with said one or more same-cell cooperating sectors (13) and providing, for the mobile terminal (B), network-based multi-sector cooperative communication, in case that said one or more cooperating sectors (13, 22) comprises one or more same-cell cooperating sectors (13);
    - determining that the base station equipment (A) cooperates with said one or more different-cell cooperating sectors (22) and providing, for the mobile terminal (B), collaboration-based multi-sector cooperative communication, in case that said one or more cooperating sectors (13, 22) comprises one or more different-cell cooperating sectors (22).

6.  The method as claimed in claim 5, wherein said network-based multi-sector cooperative communication is network-MIMO communication, and in case that the base station equipment (A) cooperates with said one or more same-cell cooperating sectors (13) and provides network-MIMO communication for the mobile terminal (B), said step iii comprises:

    iii1. determining one or more cooperating mobile terminals (B') respectively located in said one or more same-cell cooperating sectors (13);

iii2. determining first channel state information between the base station equipment (A, A') and said mobile terminal (B) as well as said one or more cooperating mobile terminals (B'), and exchanging, with the base station equipments (A, A') of said one or more same-cell cooperating sectors (13), second channel state information between them and said mobile terminal (B) as well as said one or more cooperating mobile terminals (B');

iii3. exchanging, with the base station equipments (A, A') of said one or more same-cell cooperating sectors (13), the traffic data from them to the dominated mobile terminal (B) or the cooperating mobile terminals (B');

iii4. determining a first precoding rule of the network-MIMO communication based on predefined methods, according to said first channel state information and said second channel state information;

iii5. weighting, based on said first precoding rule, the traffic data of the present sector (11) and the cooperative traffic data, and transmitting the weighted traffic data of the present sector (11) and the cooperative traffic data to said mobile terminal (B) as well as said one or more cooperating mobile terminals (B').

**7.** The method as claimed in claim 6, wherein in said step iii2 and/or iii3, the present base station equipment (A) uses interconnection between base station equipments (A, A') to exchange the channel state information and/or to exchange traffic data.

**8.** The method as claimed in claim 5 or 6, wherein said collaboration-based multi-sector cooperative communication is Co-MIMO communication, and in case that the base station equipment (A) cooperates with said one or more different-cell cooperating sectors (22) and provides Co-MIMO communication for the mobile terminal (B), said step iii comprises:

iii1'. determining one or more cooperating mobile terminals (B") respectively located in said one or more different-cell cooperating sectors (22);

iii2'. determining third channel state information between the base station equipment (A) and said mobile terminal (B) as well as said one or more cooperating mobile terminals (B'');

iii3'. determining a second precoding rule of the Co-MIMO communication based on predefined methods, according to said third channel state information, and exchanging third precoding rules with the base station equipments (A") of said one or more different-cell cooperating sectors;

iii4'. weighting, based on said second precoding rule and said third precoding rules, the traffic data of the present sector (11), and transmitting the weighted traffic data of the present sector (11) to said mobile terminal (B).

**9.** The method as claimed in claim 8, wherein said step iii2' further comprises:

- exchanging, with the base station equipments (A") of said one or more different-cell cooperating sectors (22), the information related to channel quality between the base station equipments (A") and said mobile terminal (B) as well as said one or more cooperating mobile terminals (B").

**10.** The method as claimed in claim 9, wherein in said step iii2' and/or iii3', the present base station equipment (A) uses internetwork between base stations to exchange said information related to channel quality and/or said precoding rules.

**11.** The method as claimed in claim 1, further comprising the following steps before said step i:

- determining to provide, for the mobile terminal (B), whether the single base station communication or the multi-sector cooperative communication, according to the state of the interference from neighboring sector (13, 22) to the mobile terminal (B);

- executing said step i to step iii, when determining to provide, for the mobile terminal (B), the multi-sector cooperative communication.

**Patentansprüche**

**1.** Verfahren in einer Basisstationsausrüstung (A) eines drahtlosen Kommunikationsnetzwerks zum Bereitstellen von multisektoralen kooperativen Kommunikationen für ein mobiles Endgerät (B) in einem Sektor (11), dominiert von der Basisstationsausrüstung (A), wobei besagter Sektor (11) zu einer Zelle (1) gehört und wobei das Verfahren die folgenden Schritte umfasst:

i. Bestimmen eines oder mehrerer kooperierender Sektoren (13, 22) des mobilen Endgeräts (B);

ii. Bestimmen eines Typs der multisektoralen kooperativen Kommunikation, die kooperativ mit besagtem einen oder mehreren kooperierenden Sektoren (13, 22) für das mobile Endgerät (B) bereitgestellt wird, auf Grundlage von Information von besagtem einen oder mehreren kooperierenden Sektoren (13, 22), gemäß vordefinierten Regeln;

iii. Zusammenwirken mit besagtem einen oder mehreren kooperierenden Sektoren (13, 22) und Bereitstellen, für das mobile Endgerät (B), der multisektoralen kooperativen Kommunikation des entsprechenden bestimmten Typs, wobei besagter einer oder mehrere kooperierende Sektoren (13, 22) einer oder mehrere kooperierende Sektoren derselben Zelle (13) sind und zur selben Zelle gehören wie der Sektor (11), einer oder mehrere kooperierende Sektoren verschiedener Zellen (22) sind, die zu einer Zelle gehören, die verschieden ist von der des Sektors (11), oder besagten einen oder mehrere kooperierende Sektoren derselben Zelle und besagten einen oder mehrere kooperierende Sektoren verschiedener Zellen gleichzeitig umfassen.

2. Verfahren nach Anspruch 1, wobei besagter einer oder mehrere kooperierende Sektoren (13, 22) kooperierende Sektoren derselben Zelle (13) umfassen, die zur selben Zelle (1) gehören, und/oder kooperierende Sektoren verschiedener Zellen (22), die zu einer verschiedenen Zelle (2) gehören, und besagter Schritt i umfassend:

- Empfangen (S10), von besagtem mobilen Endgerät (B), der besagten Information von besagtem einen oder mehreren kooperierenden Sektoren (13, 22).

3. Verfahren nach Anspruch 1, wobei besagter einer oder mehrere kooperierende Sektoren (13, 22) kooperierende Sektoren derselben Zelle (13) umfassen, die zur selben Zelle (1) gehören, und/oder kooperierende Sektoren verschiedener Zellen (22), die zu einer verschiedenen Zelle (2) gehören, und besagter Schritt i umfassend:

i1. Empfangen, von besagtem mobilen Endgerät (B), von Kanalqualitätsinformation zwischen besagtem mobilen Endgerät (B) und jedem des einen oder mehrerer Sektoren (13, 22), die besagtem mobilen Endgerät (B) benachbart sind;

i2. Bestimmen besagtem einen oder mehreren kooperierenden Sektoren (13, 22) gemäß der Kanalqualitätsinformation zwischen besagtem mobilen Endgerät (B) und jedem des einen oder der mehreren benachbarten Sektoren (13, 22).

4. Verfahren nach Anspruch 3, wobei der besagte Schritt i2 umfasst:

- im Falle, dass die Kanalqualität zwischen dem mobilen Endgerät (B) und einem oder mehreren Kandidatensektoren (13, 22) in besagtem einen oder mehreren benachbarten Sektoren (13, 22), die zur selben Zelle (1) gehören, eine erste Bedingung erfüllt, Bestimmen besagten einen oder mehrerer Kandidatensektoren (13, 22) als besagte kooperierende Sektoren gleicher Zelle (13);

- im Falle, dass die Kanalqualität zwischen dem mobilen Endgerät (B) und einem oder mehreren Kandidatensektoren (13, 22) in besagtem einen oder mehreren benachbarten Sektoren (13, 22), die zu einer verschiedenen Zelle (2) gehören, eine zweite Bedingung erfüllt, Bestimmen besagten einen oder mehrerer Kandidatensektoren (13, 22) als besagte kooperierende Sektoren verschiedener Zellen (22).

5. Verfahren nach einem beliebigen der Ansprüche 2 bis 4, wobei besagte vordefinierte Regeln umfassen:

- Bestimmen, dass die Basisstationsausrüstung (A) mit besagtem einen oder mehreren kooperierenden Sektoren gleicher Zelle (13) kooperiert, und Bereitstellen, für das mobile Endgerät (B), einer netzwerkbasierten multisektoralen kooperativen Kommunikation, in dem Fall, dass besagter eine oder mehrere kooperierende Sektoren (13, 22) einen oder mehrere kooperierende Sektoren gleicher Zelle (13) umfassen;

- Bestimmen, dass die Basisstationsausrüstung (A) mit besagtem einen oder mehreren kooperierenden Sektoren verschiedener Zellen (22) kooperiert, und Bereitstellen, für das mobile Endgerät (B), einer zusammenarbeitsbasierten multisektoralen kooperativen Kommunikation, in dem Fall, dass besagter eine oder mehrere kooperierende Sektoren (13, 22) einen oder mehrere kooperierende Sektoren verschiedener Zellen (22) umfassen.

6. Verfahren nach Anspruch 5, wobei besagte netzwerkbasierte multisektorale kooperative Kommunikation eine Netzwerk-MIMO-Kommunikation ist, und in dem Fall, dass die Basisstationsausrüstung (A) mit besagtem einen oder mehreren kooperierenden Sektoren gleicher Zelle (13) kooperiert, Bereitstellen einer Netzwerk-MIMO-Kommunikation für das mobile Endgerät (B), wobei besagter Schritt iii umfasst:

iii1. Bestimmen eines oder mehrerer kooperierender mobiler Endgeräte (B'), die sich jeweils in besagtem einen oder mehreren kooperierenden Sektoren gleicher Zelle (13) befinden;

iii2. Bestimmen einer ersten Kanalzustandsinformation zwischen der Basisstationsausrüstung (A, A') und besagtem mobilen Endgerät (B) sowie besagtem einen oder mehreren kooperierenden mobilen Endgeräten (B'), und Austauschen, mit den Basisstationsausrüstungen (A, A') von besagtem einen oder mehreren kooperierenden Sektoren gleicher Zelle (13), von zweiter Kanalzustandsinformation zwischen ihnen und besagtem mobilen Endgerät (B) sowie besagtem einen oder mehreren kooperierenden mobilen Endgeräten (B');

iii3. Austauschen, mit den Basisstationsausrüstungen (A, A') von besagtem einen oder mehreren kooperierenden Sektoren gleicher Zelle (13), von Verkehrsdaten von ihnen zum dominieren mobilen Endgerät (B) oder zu kooperierenden mobilen Endgeräten (B');

iii4. Bestimmen einer ersten Vorcodierregel der Netzwerk-MIMO-Kommunikation auf Grundlage vordefinierter Verfahren, gemäß besagter ersten Kanalzustandsinformation und besagter zweiten Kanalzustandsinformation;

iii5. Wichten, auf Grundlage besagter ersten Vorcodierregel, der Verkehrsdaten des gegenwärtigen Sektors (11) und der kooperativen Verkehrsdaten, und Übertragen der gewichteten Verkehrsdaten des gegenwärtigen Sektors (11) und der kooperativen Verkehrsdaten auf besagtes mobiles Endgerät (B) sowie auf besagtes eine oder mehrere kooperierende mobile Endgeräte (B').

7. Verfahren nach Anspruch 6, wobei in besagtem Schritt iii2 und/oder iii3 die gegenwärtige Basisstationsausrüstung (A) eine Verbindung zwischen Basisstationsausrüstungen (A, A') benutzt zum Austauschen der Kanalzustandsinformation und/oder zum Austauschen der Verkehrsdaten.

8. Verfahren nach Anspruch 5 oder 6, wobei besagte zusammenarbeitsbasierte multisektorale kooperative Kommunikation eine Co-MIMO-Kommunikation ist, und im Falle, dass die Basisstationsausrüstung (A) mit besagtem einen oder mehreren kooperierenden Sektoren verschiedener Zellen (22) kooperiert, Bereitstellen einer Co-MIMO-Kommunikation für das mobile Endgerät (B), wobei besagter Schritt iii umfasst:

iii1'. Bestimmen eines oder mehrerer kooperierender mobiler Endgeräte (B"), die sich jeweils in besagtem einen oder mehreren kooperierenden Sektoren verschiedener Zellen (22) befinden;

iii2'. Bestimmen einer dritten Kanalzustandsinformation zwischen der Basisstationsausrüstung (A) und besagtem mobilen Endgerät (B) sowie besagtem einen oder mehreren kooperierenden mobilen Endgeräten (B");

iii3'. Bestimmen einer zweiten Vorcodierregel der Co-MIMO-Kommunikation auf Grundlage vordefinierter Verfahren, gemäß besagter dritten Kanalzustandsinformation, und Austauschen der dritten Vorcodierregeln mit den Basisstationsausrüstungen (A") besagtem einen oder mehreren koopierenden Sektoren verschiedener Zellen;

iii4'. Wichten, auf Grundlage besagter zweiten Vorcodierregel und besagter dritten Vorcodierregeln, der Verkehrsdaten des gegenwärtigen Sektors (11), und Übertragen der gewichteten Verkehrsdaten des gegenwärtigen Sektors (11) auf besagtes mobiles Endgerät (B).

9. Verfahren nach Anspruch 8, wobei besagter Schritt iii2' weiterhin umfasst:

- Austauschen, mit den Basisstationsausrüstungen (A") von besagtem einen oder mehreren kooperierenden Sektoren verschiedener Zellen (22), von Information, die mit der Kanalqualität verbunden ist, zwischen den Basisstationsausrüstungen (A") und besagtem mobilen Endgerät (B) sowie besagtem einen oder mehreren kooperierenden mobilen Endgeräten (B").

10. Verfahren nach Anspruch 9, wobei in besagtem Schritt iii2' und/oder iii3' die gegenwärtige Basisstationsausrüstung (A) ein Inter-Netzwerk benutzt zwischen den Basisstationen zum Austauschen besagter Information in Bezug auf die Kanalqualität und/oder besagte Vorcodierregeln.

11. Verfahren nach Anspruch 1, weiterhin umfassend die folgenden Schritte vor besagtem Schritt i:

- Bestimmen zum Bereitstellen, für das mobile Endgerät (B), entweder der einzelnen Basisstation-Kommunikation oder der multisektoralen kooperativen Kommunikation, gemäß dem Interferenzzustand vom benachbarten Sektor (13, 22), für das mobile Endgerät (B);

- Ausführen besagten Schrittes i bis Schritt iii., wenn bestimmt wird, dem mobilen Endgerät (B) die multisektorale kooperative Kommunikation bereitzustellen.

**Revendications**

1. Procédé, dans un équipement de station de base (A) d'un réseau de communication sans fil, de fourniture de communications coopératives à multiples secteurs à un terminal mobile (B) dans un secteur (11) dominé par l'équipement de station de base (A), ledit secteur (11) appartenant à une cellule (1), le procédé comprenant les étapes suivantes :

   i. déterminer un ou plusieurs secteurs de coopération (13, 22) du terminal mobile (B) ;
   ii. déterminer un type de la communication coopérative à multiples secteurs fournie de manière coopérative avec ledit ou lesdits secteurs de coopération (13, 22) au terminal mobile (B), sur la base d'informations dudit ou desdits secteurs de coopération (13, 22), conformément aux règles prédéfinies ;
   iii. coopérer avec ledit ou lesdits secteurs de coopération (13, 22) et fournir, au terminal mobile (B), la communication coopérative à multiples secteurs du type déterminé correspondant, dans lequel ledit ou lesdits secteurs de coopération (13, 22) sont un ou plusieurs secteurs de coopération d'une même cellule (13) appartenant à la même cellule que celle du secteur (11), un ou plusieurs secteurs de coopération d'une cellule différente (22) appartenant à une cellule différente de celle du secteur (11), ou comprennent ledit ou lesdits secteurs de coopération d'une même cellule et ledit ou lesdits secteurs de coopération d'une cellule différente simultanément.

2. Procédé selon la revendication 1, dans lequel ledit ou lesdits secteurs de coopération (13, 22) comprennent des secteurs de coopération d'une même cellule (13) appartenant à la même cellule (1), et/ou des secteurs de coopération d'une cellule différente (22) appartenant à une cellule différente (2), et ladite étape i comprend l'étape suivante :

   - recevoir (S10), à partir dudit terminal mobile (B), les informations dudit ou desdits secteurs de coopération (13, 22).

3. Procédé selon la revendication 1, dans lequel ledit ou lesdits secteurs de coopération (13, 22) comprennent des secteurs de coopération d'une même cellule (13) appartenant à la même cellule (1), et/ou des secteurs de coopération d'une cellule différente (22) appartenant à une cellule différente (2), et ladite étape i comprend les étapes suivantes :

   i1. recevoir, à partir dudit terminal mobile (B), des informations de qualité de canal entre ledit terminal mobile (B) et chacun parmi le ou les secteurs (13, 22) avoisinant ledit terminal mobile (B) ;
   i2. déterminer ledit ou lesdits secteurs de coopération (13, 22) conformément aux informations de qualité de canal entre ledit terminal mobile (B) et chacun parmi le ou les secteurs (13, 22) avoisinant.

4. Procédé selon la revendication 3, dans lequel ladite étape i2 comprend :

   - au cas où la qualité de canal entre le terminal mobile (B) et un ou plusieurs secteurs candidats (13, 22) dans ledit ou lesdits secteurs (13, 22) avoisinant appartenant à la même cellule (1) satisferait une première condition, déterminer ledit ou lesdits secteurs candidats (13, 22) comme lesdits secteurs de coopération d'une même cellule (13) ;
   - au cas où la qualité de canal entre le terminal mobile (B) et un ou plusieurs secteurs candidats (13, 22) dans ledit ou lesdits secteurs (13, 22) avoisinant appartenant à une cellule différente (2) satisferait une deuxième condition, déterminer ledit ou lesdits secteurs candidats (13, 22) comme lesdits secteurs de coopération d'une cellule différente (22).

5. Procédé selon l'une quelconque des revendications 2 à 4, dans lequel lesdites règles prédéfinies comprennent :

   - déterminer que l'équipement de station de base (A) coopère avec ledit ou lesdits secteurs de coopération d'une même cellule (13) et fournir, au terminal mobile (B), une communication coopérative à multiples secteurs basée sur un réseau, au cas où ledit ou lesdits secteurs de coopération (13, 22) comprendraient un ou plusieurs secteurs de coopération d'une même cellule (13) ;
   - déterminer que l'équipement de station de base (A) coopère avec ledit ou lesdits secteurs de coopération d'une cellule différente (22) et fournir, au terminal mobile (B), une communication coopérative à multiples secteurs basée sur une collaboration, au cas où ledit ou lesdits secteurs de coopération (13, 22) comprendraient un ou plusieurs secteurs de coopération d'une cellule différente (22).

6. Procédé selon la revendication 5, dans lequel ladite communication coopérative à multiples secteurs basée sur un réseau est une communication réseau-MIMO, et dans le cas où l'équipement de station de base (A) coopérerait avec ledit ou lesdits secteurs de coopération d'une même cellule (13) et fournirait une communication réseau-MIMO au terminal mobile (B), ladite étape iii comprend les étapes suivantes :

iii1. déterminer un ou plusieurs terminaux mobiles de coopération (B') situés respectivement dans ledit ou lesdits secteurs de coopération d'une même cellule (13) ;

iii2. déterminer des premières informations d'état de canal entre l'équipement de station de base (A, A') et ledit terminal mobile (B) ainsi que ledit ou lesdits terminaux mobiles de coopération (B'), et échanger, avec les équipements de station de base (A, A') dudit ou desdits secteurs de coopération d'une même cellule (13), des deuxièmes informations d'état de canal entre eux et ledit terminal mobile (B) ainsi que ledit ou lesdits terminaux mobiles de coopération (B') ;

iii3. échanger, avec les équipements de station de base (A, A') dudit ou desdits secteurs de coopération d'une même cellule (13), les données de trafic entre eux et le terminal mobile dominé (B) ou les terminaux mobiles de coopération (B') ;

iii4. déterminer une première règle de précodage de la communication réseau-MIMO sur la base des procédés prédéfinis, conformément auxdites premières informations d'état de canal et auxdites deuxièmes informations d'état de canal ;

iii5. pondérer, sur la base de ladite première règle de précodage, les données de trafic du présent secteur (11) et les données de trafic coopératives, et transmettre les données de trafic pondérées du présent secteur (11) et les données de trafic coopératives audit terminal mobile (B) ainsi qu'audit ou auxdits terminaux mobiles de coopération (B').

7. Procédé selon la revendication 6, dans lequel dans ladite étape iii.2 et/ou iii3, le présent équipement de station de base (A) utilise une interconnexion entre des équipements de station de base (A, A') pour échanger les informations d'état de canal et/ou pour échanger des données de trafic.

8. Procédé selon la revendication 5 ou 6, dans lequel ladite communication coopérative à multiples secteurs basée sur une collaboration est une communication Co-MIMO, et dans le cas où l'équipement de station de base (A) coopérerait avec ledit ou lesdits secteurs de coopération d'une cellule différente (22) et fournirait une communication Co-MIMO au terminal mobile (B), ladite étape iii comprend les étapes suivantes :

iii1'. déterminer un ou plusieurs terminaux mobiles de coopération (B") situés respectivement dans ledit ou lesdits secteurs de coopération d'une cellule différente (22);

iii2'. déterminer des troisièmes informations d'état de canal entre l'équipement de station de base (A) et ledit terminal mobile (B) ainsi que ledit ou lesdits terminaux mobiles de coopération (B") ;

iii3'. déterminer une deuxième règle de précodage de la communication Co-MIMO sur la base de procédés prédéfinis, conformément auxdites troisièmes informations d'état de canal, et échanger les troisièmes règles de précodage avec les équipements de station de base (A") dudit ou desdits secteurs de coopération d'une cellule différente ;

iii4'. pondérer, sur la base de ladite deuxième règle de précodage et desdites troisièmes règles de précodage, les données de trafic du présent secteur (11), et transmettre les données de trafic pondérées du présent secteur (11) audit terminal mobile (B).

9. Procédé selon la revendication 8, dans lequel ladite étape iii.2' comprend en outre l'étape suivante :

- échanger, avec les équipements de station de base (A") dudit ou desdits secteurs de coopération d'une cellule différente (22), les informations en rapport avec la qualité de canal entre les équipements de station de base (A") et ledit terminal mobile (B) ainsi que ledit ou lesdits terminaux mobiles de coopération (B").

10. Procédé selon la revendication 9, dans lequel dans ladite étape iii.2' et/ou iii3', le présent équipement de station de base (A) utilise un interréseau entre des stations de base pour échanger lesdites informations en rapport avec la qualité de canal et/ou lesdites règles de précodage.

11. Procédé selon la revendication 1, comprenant en outre les étapes suivantes avant ladite étape i :

- déterminer la fourniture au terminal mobile (B) de la communication de station de base unique ou de la communication coopérative à multiples secteurs, conformément à l'état des interférences entre le secteur voisin (13, 22) et le terminal mobile (B) ;
- exécuter lesdites étapes i à iii, au moment de déterminer la fourniture de la communication coopérative à multiples secteurs au terminal mobile (B).

Fig. 1

Fig. 2

Cell3

Sector 31

Sector 33 | Sector 32

Sector 21

Cell2

Sector 23 | Sector 22

Sector1

Sector 41

Cell4

Sector 43 | Sector 42

Sector 13 | Sector 12

Cell1

Sector center     Same-cell sector edge     Different-cell sector edge

Fig. 3

Cell 2

Mobile terminal B"

Mobile terminal B

Sector 22

Base station
equipment A"

Base station
equipment A

Mobile terminal B'

Base station
equipment A'

Sector 13

Cell 1

Fig. 4

**Mobile terminal B**

**Base station
equipment A**

S20: obtaining channel quality information between the mobile terminal and neighboring sectors

S21: determining the same-cell cooperating sectors or different-cell cooperating sectors, according to the channel quality information

S22: transmitting, to the base station equipment A, information of the determined cooperating sectors

S10: receiving, from the mobile terminal B, the information of the cooperating sectors

S11: determining to provide, for the mobile terminal B, network-MIMO or Co-MIMO together with the cooperating sectors, according to the information of the cooperating sectors

Network-MIMO or Co-MIMO

Network-MIMO

Co-MIMO

S120': determining a cooperating mobile terminal B'' in the different-cell cooperating sector 22

S121': determining the channel state information to mobile terminal B and B''

S122': determining precoding rules of Co-MIMO, and exchanging the precoding rules with the BS equipment A'' of the different-cell cooperating sector 22

S123': weighting the traffic data according to the precoding rules of the present BS equipment and the cooperating BS equipment, and transmitting to the mobile terminal B

S120: determining a cooperating mobile terminal B' in the same-cell cooperating sector 13

S121: determining the channel state information to mobile terminal B and B', and exchanging the channel state information with the BS equipment A' of the same-cell cooperating sector 13

S122: exchanging traffic data with the same-cell cooperating BS equipment A'

S123: determining precoding rules of network-MIMO

S124: weighting all traffic data according to the precoding rules of network-MIMO, and transmitting to the mobile terminal B and B'

Fig. 5

Fig. 6

Mobile terminal B                    Base station equipment A

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004176097 A1

**Non-patent literature cited in the description**

- Network MIMO in LTE-Advanced. **LG ELECTRON-ICS.** 3GPP DRAFT; R1-083653, 3RD GENERATION PARTNERSHIP PROJECT (3GPP). MOBILE COM-PETENCE CENTRE, 24 September 2008